# EUROPEAN PATENT APPLICATION

(11) **EP 3 562 026 A1**
(43) Date of publication of application: **30.10.2019**
(21) Application number: 17882407.4
(22) Date of filing: 21.12.2017
(51) Int. Cl.: H02P 5/46, B25J 19/00, B60L 9/18

(54) **MOTOR DRIVING SYSTEM**

(30) Priority: 22.12.2016 JP 2016250020
(71) Applicant: Nidec Corporation, Kyoto-shi, Kyoto 601-8205 (JP)
(72) Inventor: SATO Motoki, Kyoto-shi Kyoto 601-8205 (JP); TABUCHI Tetsuya, Kyoto-shi Kyoto 601-8205 (JP); TAKAHASHI Hirotaka, Kyoto-shi Kyoto 601-8205 (JP)
(74) Representative: Zimmermann, Tankred Klaus
(86) International application number: PCT/JP2017/045950
(87) International publication number: WO 2018/117220

(57) **Abstract**

A motor drive system (103) includes a plurality of motor units (106A) and (106B). Each of the plurality of motor units is arranged to operate in accordance with a unified operation command transmitted from an outside to cause an operation to be accomplished by the motor drive system as a whole. The motor unit (106A) includes a communication circuit (110A) arranged to receive the unified operation command; a motor (116A); a storage device (113A) arranged to store data representing a rotation direction of the motor associated with the unified operation command; a control circuit (112A)arranged to refer to the data, and generate a control signal for causing the motor to rotate in the rotation direction associated with the unified operation command; and a drive circuit (114A) arranged to cause an electric current to pass through the motor on the basis of the control signal.

## Description

### TECHNICAL FIELD

The present disclosure relates to a motor drive system.

### BACKGROUND ART

Motors are used in a variety of fields. In recent years, it has become not unusual that a plurality of motors are installed in a single device. In such a device, the plurality of motors sometimes cooperate to accomplish a single operation to be accomplished by the device as a whole. For example, an automated guided vehicle (which is referred to also as a "self-propelled robot" or an "AGV" (Automatic (Automated) Guided Vehicle)) in which a motor is provided for each of a plurality of wheels is arranged to move forward or backward in a straight line when the motors provided for the plurality of wheels rotate in the same rotation direction at the same speed. The AGV turns to the right or to the left when the rotation direction and/or the rotation speed is different therebetween.

A variety of arrangements of the plurality of motors are conceivable. For example, two identical motors can be arranged at two rear wheels of the aforementioned self-propelled robot with a rotating shaft of each motor being directed outwardly of a vehicle body. To give another example, two identical motors are arranged at a joint of an industrial robot with rotating shafts of the two motors being arranged opposite to each other. One arm is arranged at the two rotating shafts opposite to each other, and is moved upward and downward by the two motors. An improvement in output of the joint can thus be achieved.

In the case where a plurality of motors are installed with rotating shafts thereof being directed in mutually opposite directions as in the above case, it is necessary to control two motors to rotate in mutually opposite directions to cause a device as a whole to operate in one direction. For example, in the case where the aforementioned self-propelled robot is to be caused to move forward, it is necessary to cause a motor at a left wheel to make a left rotation (e.g., a counterclockwise (CCW) rotation) and a motor at a right wheel to make a right rotation (e.g., a clockwise (CW) rotation). To achieve this, it is necessary to reverse the direction of control of one of the motors with respect to the other motor.

This is currently accomplished by, to control one of the motors from a host device, providing a plurality of switching elements or gears to reverse the rotation direction (i.e., the control direction) of the motor or reverse the direction of an electric current on a circuit.

A technique of JP-A 2014-027726 enables motor control by providing a plurality of power circuits, and arranging a power circuit connected to a motor to be switched therebetween in accordance with a driving mode to select the driving mode. However, in the technique of the above patent document, a common driving mode is used for both moving forward and moving backward of a vehicle, and therefore, it is still necessary to reverse the direction of control of a motor or reverse the direction of an electric current on a circuit in accordance with whether the vehicle is to be moved forward or backward.

### LISTING OF REFERENCES

### PATENT DOCUMENTS

Patent document 1: JP-A 2014-027726

### SUMMARY OF THE INVENTION

### PROBLEMS TO BE SOLVED BY THE INVENTION

To reverse the direction of control of a motor or reverse the direction of an electric current when controlling the motor from a host device, it is necessary for a developer to be familiar with the arrangement of all motors. In addition, when making an instruction about the behavior of a device as a whole, it is necessary to change the content of an instruction signal in order to control left and right motors. However, from a software standpoint, it is difficult to intuitively recognize whether each motor should be caused to rotate in the CW direction or in the CCW direction in order to cause a self-propelled robot to move forward.

Similarly, if the orientation of a motor is changed at a later time, a code change will be necessary on the software side. In this case, the direction of the electric current is reversed, and this may make it impossible to use a common circuit to control motors connected to left and right wheels.

Difficulty in intuitive recognition at the time of software development and a need to provide independent circuits may lead to increases in development and production costs.

A non-limiting, exemplary embodiment of the present disclosure provides a motor drive system for accomplishing control by an intuitively understandable method.

### SOLUTION TO THE PROBLEMS

A motor drive system according to an exemplary embodiment of the present disclosure includes a plurality of motor units. Each of the plurality of motor units is arranged to operate in accordance with a unified operation command transmitted from an outside to cause an operation to be accomplished by the motor drive system as a whole. Each of the plurality of motor units includes a communication circuit arranged to receive the unified operation command; A MOTOR; A storage device arranged to store data representing a rotation direction of the motor associated with the unified operation command; A control circuit arranged to refer to the data, and generate a control signal for causing the motor to rotate in the rotation direction associated with the unified operation command; AND A drive circuit arranged to cause an electric current to pass through the motor on a basis of the control signal.

A motor unit according to an exemplary embodiment of the present disclosure is a motor unit for use in a motor drive system, the motor unit including a communication circuit arranged to receive, from an outside, a unified operation command to cause an operation to be accomplished by the motor drive system as a whole; a motor; a storage device arranged to store data representing a rotation direction of the motor associated with the unified operation command; a control circuit arranged to refer to the data, and generate a control signal for causing the motor to rotate in the rotation direction associated with the unified operation command; and a drive circuit arranged to cause an electric current to pass through the motor on a basis of the control signal.

### ADVANTAGES OF THE INVENTION

According to an exemplary embodiment of the present invention, each of the plurality of motor units in the motor drive system is arranged to operate in accordance with the unified operation command. Each motor unit stores the data representing the rotation direction of the motor associated with the unified operation command in the storage device thereof. A developer is able to intuitively write an instruction from an application to each motor without the need to be conscious of the orientation of the motor. Because there is no need to generate a separate instruction for each motor, easy control of an operation of the motor is made possible.

### BRIEF DESCRIPTION OF THE DRAWINGS

FIG. 1A is a diagram illustrating the structure of a data frame 1a used in wired serial communication.
FIG. 1B is a diagram illustrating the structure of a data frame 1b used in wireless communication.
FIG. 2 is a diagram illustrating a common data structure 12.
FIG. 3A is a diagram for explaining an outline of a process performed by a motor drive system according to an exemplary embodiment.
FIG. 3B is a diagram for explaining an outline of a process performed by a motor drive system according to an exemplary embodiment.
FIG. 4 is a diagram illustrating an external appearance of a self-propelled robot 100.
FIG. 5 is a diagram illustrating the hardware configuration of the self-propelled robot 100, in particular, of a motor drive system 103 thereof.
FIG. 6 is a flowchart illustrating a procedure of processing performed by each of motor units 106A and 106B.
FIG. 7 is a diagram illustrating the structure of a welding robot 200.
FIG. 8 is a diagram illustrating the specific configuration of a third joint drive system 210C.

### MODE FOR CARRYING OUT THE INVENTION

Motor drive systems according to embodiments of the present disclosure are arranged to operate by receiving commands transmitted from an outside, such as, for example, a higher-level device, another motor drive system, or another motor drive system or motor unit inside the same device.

Hereinafter, a communications protocol used when transmission and reception are performed between a motor drive system and an external device will first be described with reference to the accompanying drawings. Thereafter, the structure and operations of the motor drive system will be described.

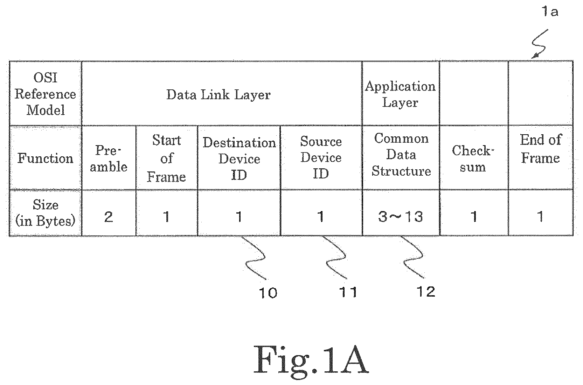

FIG. 1A illustrates the structure of a data frame 1a used in wired serial communication. An example of serial communication assumed here is communication conforming to the RS-485 standard. The RS-485 standard defines electrical specifications of a physical layer of the OSI reference model.

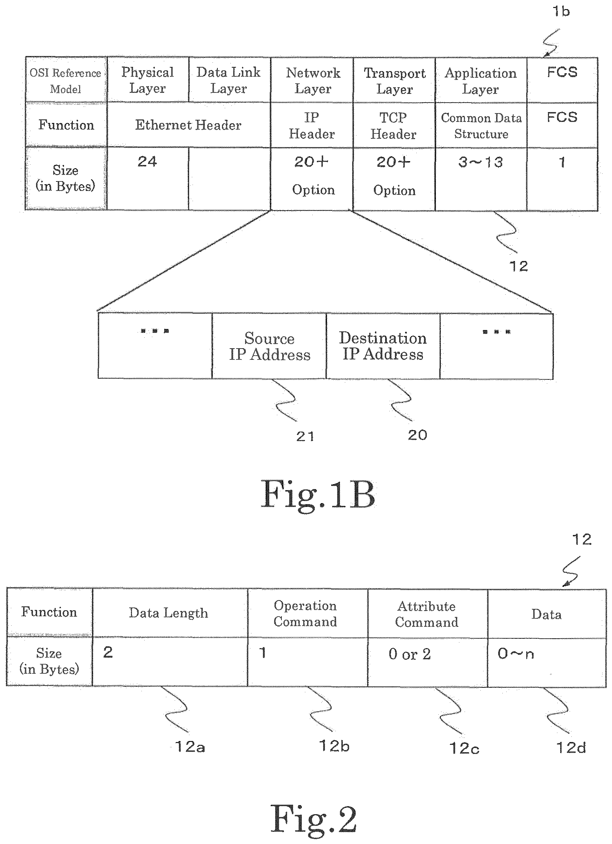

The data frame 1a contains various types of data. For the purpose of reference, divisions of layers of the OSI reference model are shown in a top row of FIG. 1A. Meanwhile, in a bottom row of FIG. 1A, the data size of data is shown in bytes. Explanatory notes are provided in a leftmost column of FIG. 1A. The same applies to FIGS. 1B and 2, which will be referred to below.

The data frame 1a includes, for example, a destination device ID 10, a source device ID 11, and a common data structure 12. The destination device ID 10 is an identifier for identifying a destination device. The source device ID 11 is an identifier for identifying a source device. The source device may be a higher-level device or another motor drive system. The identifier is, for example, an IP address or an ID (e.g., a device identifier or a device ID) uniquely assigned to each device when the device is produced. The device ID or IP address is an identifier that uniquely represents a motor unit within a communication network. The common data structure 12 is a data structure including one or two commands, which will be described below.

In the past, only a device ID of a destination which identifies a motor to be controlled was enough to control the motor. This is because a device that transmits a command, which corresponds to a host device, and a device that receives the command, which corresponds to a slave, were uniquely determined. In a system that includes a plurality of motor units, a plurality of devices that correspond to host devices exist, or different devices can operate as a device that corresponds to a host device, and therefore, a device that transmits a command may sometimes not be uniquely determined.

The present inventors have made a study on a construction of a previously-unconceived motor drive system in which a plurality of motors communicate with each other to operate in conjunction with each other for a common purpose. Then, the present inventors have recognized a need for a new communications protocol for such a system, and newly defined the source device ID 11 and the common data structure 12.

FIG. 1B illustrates the structure of a data frame 1b used in wireless communication. An example of wireless communication assumed here is communication conforming to a Wi-Fi® (the trademark symbol will be omitted hereinafter) standard. The Wi-Fi standard defines specifications of the physical layer and a data link layer of the OSI reference model.

The data frame 1b includes a plurality of headers for various layers of the OSI reference model. As originally determined, a destination IP address 20 and a source IP address 21 are stored in an IP header. The present inventors have considered that the source IP address 21 can be used as an identifier that corresponds to the aforementioned source device ID 11. Therefore, the present inventors have determined to utilize the source IP address 21 in a communications protocol that uses a common data structure 12 of the Wi-Fi standard.

Note that the wired communication and the wireless communication described above are merely examples. Any other desired communications protocol can alternatively be used. The present inventors have determined to use an identifier that uniquely represents a source in a communication system in which communication is performed between motors for motor control. Therefore, embodiments of the present disclosure are applicable to communication systems in which communication is performed between motors if an identifier that uniquely represents a source is included in a header or the like. That is, an identifier that represents a source even in an existing communications protocol can be used as an identifier corresponding to the source device ID 11 in communication between motors.

FIG. 2 illustrates the common data structure 12.

The common data structure 12 includes a data length field 12a, an operation command field 12b, an attribute command field 12c, and a data field 12d.

The data length field 12a represents the total number of bytes of the common data structure 12.

The operation command field 12b represents an operation command for causing a motor to perform an operation, for example. The operation command is described as a numerical value (in binary form) representing the operation command. Examples of operation commands include "Write Data", "Read Data", "Execution", and "Connect". Operations of "Write Data", "Read Data", and so on are operations performed by a motor unit in connection with motor operations. That is, the operation command can be said to be a request from or to another motor unit, the request specifying an operation to be performed by the motor unit.

The attribute command field 12c represents an attribute command that specifies an attribute related to a motor. The attribute command is also described as a numerical value (in binary form) representing the command. Examples of attribute commands include "Present Angle", "Target Angle", "Angle Limit", and "Serial Number". The attribute command can be said to be a static or dynamic attribute which is related to a motor and which is specified together with the operation command.

In the data field 12d, data for the attribute command field 12c is described. Examples of such data include an angle setting value, a rotation speed setting value, and a serial number value.

The common data structure described above has a relatively short data length, which is, for example, in the range of 3 bytes to 13 bytes. As the size is 32 bytes in the case of EtherCAT, which is another communications protocol, an elimination of mixing in communication and a reduced occupation of a communication channel can be achieved. Further, an easier understanding by a user (or a programmer) can be achieved since the operation command and the attribute command are separately provided.

Commands stored in the operation command field 12b and the attribute command field 12c will be described below together with an embodiment of the present disclosure.

Next, a motor drive system according to an exemplary embodiment of the present disclosure will now be described below.

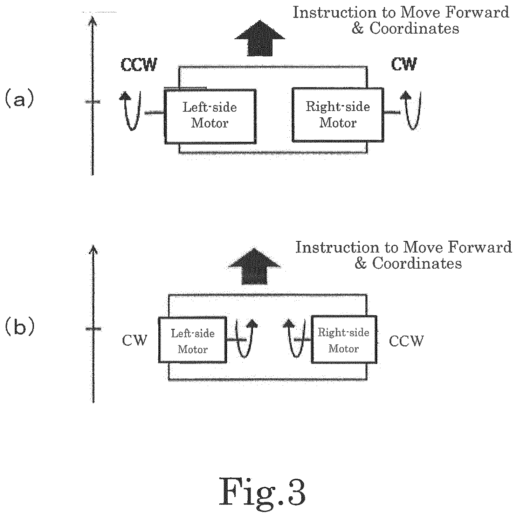

FIGS. 3A and 3B are diagrams for explaining outlines of processes performed by the motor drive system according to the present embodiment.

An example of a self-propelled robot moving forward will be described below as an example of an operation to be accomplished by the motor drive system as a whole, in other words, as an example of a plurality of motors cooperating to accomplish a single unified operation to be accomplished by a device as a whole. To accomplish the above operation, a "command" representing one content is transmitted to the motor drive system. In the present disclosure, such a command will sometimes be referred to as a "unified operation command".

As described in the description of the background art, it is necessary to cause a motor on a left side to make a left rotation (e.g., a CCW rotation) and a motor on a right side to make a right rotation (e.g., a CW rotation) when the self-propelled robot is to be moved forward. It is assumed herein that a rotation direction of a motor as viewed from the side of a load is referred to as the rotation direction of the motor. When controlling the motors, a host device needs to reverse the control of one of the motors with respect to the control of the other motor, or reverse the direction of an electric current.

In the present embodiment, a process to be performed by an entity that gives an instruction for an operation is simplified by enabling motor control to be intuitively performed in a unique direction without the need to reverse the direction of control or cause electric currents to flow in opposite directions.

For example, a motor drive system as illustrated in FIG. 3A, in which rotating shafts of motors are directed outward, will be considered. In order to "cause the self-propelled robot to move forward", the left-side motor is requested to make the CCW rotation, and the right-side motor is requested to make the CW rotation.

According to the present embodiment, an instruction from an application can be completed with a single command. Specifically, the application only needs to transmit a "Direction Setting command" to each motor.

Upon receipt of this command, the right-side motor and the left-side motor interpret the single command as different instructions for rotation. Specifically, the right-side motor interprets the "Direction Setting command" as a command to make the CW rotation, while the left-side motor interprets the "Direction Setting command" as a command to make the CCW rotation.

In order to realize the above, rules shown in Table 1 below are set in advance for the right-side motor and the left-side motor.

**[Table 1]**

| Motor | Configuration of Direction Setting |
|---|---|
| Right-side Motor | CW |
| Left-side Motor | CCW |

Thus, issuing the above command to each of the left-side and right-side motors causes the self-propelled robot to move forward. An application creator only needs to conceive a moving direction (i.e., a code) to be realized by the system as a whole, and specify the above command using the same code to instruct the motors, without the need to design a program in such a manner that a command will be issued with a changed instruction signal, and this allows an intuitive development.

A motor drive system as illustrated in FIG. 3B, in which rotating shafts of motors are directed inward, will be considered as another example. In the case where the structure of the motor drive system is changed as illustrated in FIG. 3B, rules as shown in Table 2 may be set in advance for the right-side motor and the left-side motor.

**[Table 2]**

| Motor | Configuration of Direction Setting |
|---|---|
| Right-side Motor | CCW |
| Left-side Motor | CW |

Then, each of the left-side motor and the right-side motor performs an operation different from that performed in the case of the example of FIG. 3A even if the same "Direction Setting command" is received. As in the case of the example of FIG. 3A, the right-side motor and the left-side motor interpret the single command as different instructions for rotation.

Setting, in each motor in advance, an operation to be performed by the motor when a given command is received by the motor makes it possible to cause each of the plurality of motors to rotate in a different direction or to stop by simply specifying a unified operation command. Not only the operation of moving forward but also operations of, for example, moving backward, turning to the left, turning to the right, etc., can be brought about. For the operation of moving backward, the settings for the right-side motor and the left-side motor in the rules shown in Table 1 or Table 2 may be reversed. For the operation of turning to the left, in the case of the motor drive system illustrated in FIG. 3A, rules shown in Table 3 may be set in advance for the right-side motor and the left-side motor.

**[Table 3]**

| Motor | Configuration of Direction Setting |
|---|---|
| Right-side Motor | CCW |
| Left-side Motor | CCW |

The rotation directions that can be specified are not limited to CW and CCW. In the present disclosure, a null ("0") value, meaning no rotation, can also be specified for the rotation direction associated with the "Direction Setting command". Manners of specifying no rotation will be described below. Table 4 shows an example of turning to the left, in which "0" is set for the rotation of the left-side motor.

**[Table 4]**

| Motor | Configuration of Direction Setting |
|---|---|
| Right-side Motor | CCW |
| Left-side Motor | 0 |

A configuration for realizing the above-described operations will be described in detail below.

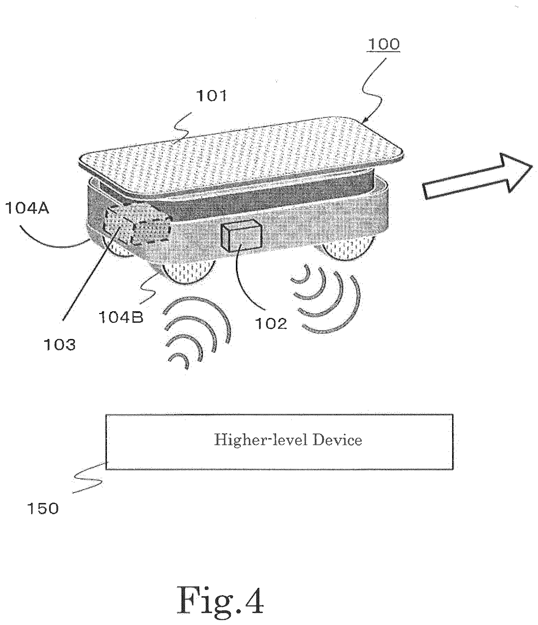

FIG. 4 illustrates an external appearance of a self-propelled robot 100. When traveling forward, the self-propelled robot 100 travels in a direction indicated by an arrow in FIG. 4.

The self-propelled robot 100 includes a conveying table 101, a system controller 102, a motor drive system 103, a left wheel 104A, and a right wheel 104B. The conveying table 101 is a table on which a load is mounted. The system controller 102 is a signal processing processor (i.e., a CPU) arranged to control the self-propelled robot 100 as a whole. The system controller 102 performs, for example, a process of initializing the self-propelled robot 100 when power thereof is turned on.

The motor drive system 103 includes two motor units arranged to drive the left wheel 104A and the right wheel 104B, respectively. In the present embodiment, each motor unit of the motor drive system 103 includes a communication circuit (which will be described below) arranged to independently receive a command from a higher-level device 150. Note, however, that it may be sufficient if at least one communication circuit is provided in the present embodiment. It may be sufficient if the communication circuit is capable of distributing a command from the higher-level device 150 to each motor unit.

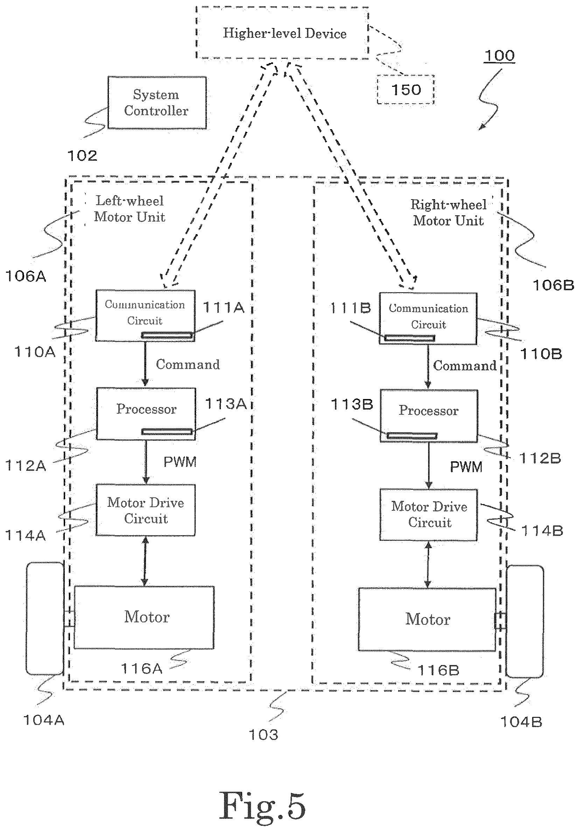

FIG. 5 illustrates the hardware configuration of the self-propelled robot 100, in particular, of the motor drive system 103 thereof. For the purpose of reference, the higher-level device 150, which is not included in the self-propelled robot 100, is represented by a broken line.

The motor drive system 103 includes a left-wheel motor unit 106A and a right-wheel motor unit 106B. The left-wheel motor unit 106A includes a communication circuit 110A, a processor 112A, a motor drive circuit 114A, and a motor 116A. The right-wheel motor unit 106B includes a communication circuit 110B, a processor 112B, a motor drive circuit 114B, and a motor 116B. It will be understood that the configuration illustrated in FIG. 5 corresponds to the configuration of FIG. 3A. Hereinafter, the left-wheel motor unit 106A and the right-wheel motor unit 106B may sometimes be described collectively as the "motor units 106A and 106B". Each of the motor units 106A and 106B may sometimes be referred to as an Intelligent Motor®.

The communication circuits 110A and 110B include buffers 111A and 111B, respectively. The buffers 111A and 111B have stored therein identifiers for identifying the motor units 106A and 106B, respectively, in advance. It may be sufficient if each identifier is a character(s) and/or a number(s) that can be uniquely identified within a communication network in a communicable range, and the identifier may be, for example, an IP address or an ID (i.e., a device ID) uniquely assigned to each device.

Upon receipt of a data frame, the communication circuits 110A and 110B perform processes related to the physical layer and the data link layer, and determine whether the destination device ID 10 (see FIG. 1A) of the data frame corresponds with the identifiers stored in the buffers 111A and 111B, respectively, or their own identifier. If they correspond, the communication circuits 110A and 110B continue to process the data frame, while if they do not correspond, the communication circuits 110A and 110B discard the data frame.

In the case where wireless communication conforming to the Wi-Fi standard is performed, the IP address can be adopted as their own identifier mentioned above. Each of the communication circuits 110A and 110B determines whether the destination IP address 20 (see FIG. 1B) of the data frame corresponds with its own IP address. The process to be performed thereafter is the same as the process described above.

When the processing of the data frame is continued, the communication circuits 110A and 110B sequentially perform, on the data frame, processes related to an IP layer, a transport layer, etc., of the OSI reference model, and extract the common data structure 12 therefrom. As described above, the operation command 12b and so on are included in the common data structure 12. The communication circuits 110A and 110B extract the command, and transmit the command to the processors 112A and 112B, respectively.

Each of the processors 112A and 112B is a signal processing processor in which semiconductors are integrated. Each processor is referred to also as a "signal processing circuit" or a "control circuit". The processors 112A and 112B include registers 113A and 113B, respectively, which are arranged to store data used in arithmetic processing.

In the present embodiment, the rules shown in Table 1 are held in the registers 113A and 113B. Specifically, "CCW", which is data associated with the "Direction Setting command", has been written to the register 113A. Similarly, "CW", which is data holding data associated with the "Direction Setting command", has been written to the register 113B. Note that both "CW" and "CCW" are forms of expression used for easier understanding. They may alternatively be, for example, "0" and "1", respectively, or other values.

Hereinafter, data associated with the "Direction Setting command" will be described as "rotation direction setting data". In order for the motor units 106A and 106B to operate when receiving the "Direction Setting command" from the higher-level device 150, rotation direction setting data needs to be stored in advance in each of the registers 113A and 113B. A process for writing the rotation direction setting data will be described below.

The processors 112A and 112B read the data associated with the "Direction Setting command" from the registers 113A and 113B, respectively, and generate signals for causing the motors 116A and 116B, respectively, to rotate in a specified rotation direction. These signals are, for example, pulse width modulation (PWM) signals.

The motor drive circuits 114A and 114B are, for example, inverter circuits, and are arranged to cause an electric current of a magnitude specified by the PWM signal to pass through the motors 116A and 116B, respectively, in a direction specified by the PWM signal. As a result, the motor 116A is caused to rotate in a counterclockwise direction, while the motor 116B is caused to rotate in a clockwise direction.

In the command, the speed and time at and for which each of the motors 116A and 116B is caused to rotate, for example, can be specified using the attribute command 12c and the data 12d (see FIG. 2). At this time, no rotation of each of the motors 116A and 116B can be specified by setting the rotation speed to "0". No rotation of each of the motors 116A and 116B can also be specified by setting the rotation direction to "0" as shown in Table 4. The processors 112A and 112B may generate the PWM signals in such a manner that the motors 116A and 116B, respectively, will be caused to rotate at the specified rotation speed for the specified time.

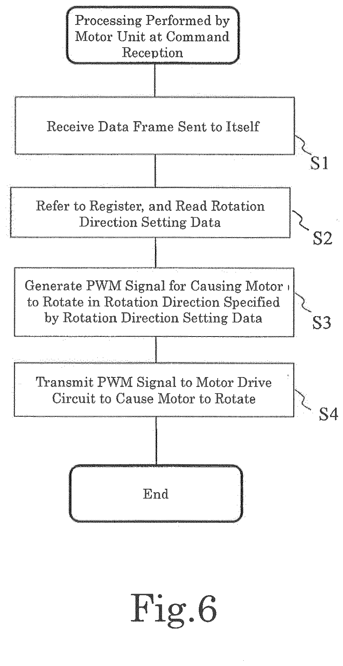

FIG. 6 is a flowchart illustrating a procedure of processing performed by each of the motor units 106A and 106B. As an example, the processing performed by the motor unit 106A will be described below.

At step S1, the communication circuit 110A refers to the destination device ID 10 or the destination IP address 20, and receives the data frame if the destination thereof is the communication circuit 110A.

At step S2, the processor 112A refers to the register 113A, and reads the rotation direction setting data therefrom.

At step S3, the processor 112A generates a PWM signal for causing the motor to rotate in a rotation direction specified by the rotation direction setting data.

At step S4, the processor 112A transmits the PWM signal to the motor drive circuit 114A to cause the motor 116A to rotate.

Similar processing is performed with respect to the motor unit 106B as well. In the case of the motor unit 106B, however, the rotation direction setting data referred to at step S2 has a value different from the value of the rotation direction setting data held in the motor unit 106A. As a result, the PWM signal generated is also different, and the motor 116B is caused to rotate in a direction opposite to the direction in which the motor 116A is caused to rotate. When the same single command is received as the unified operation command, the motors 116A and 116B are caused to rotate in mutually opposite directions in the motor unit 106A and the motor unit 106B.

While the buffers 111A and 111B and the registers 113A and 113B have been described by way of example in the foregoing description, they are merely examples of storage devices. Other storage devices, such as, for example, random-access memories (RAMs), read-only memories (ROMs), or electrically erasable programmable read-only memories (EEPROMs), may alternatively be used.

The higher-level device 150 may transmit a plurality of data frames with only a destination address or the destination IP address being changed for each motor unit. Alternatively, in the case where IP multicast is used, for example, a data frame may be transmitted only once with an IP address representing a multicast group being specified as the destination address. Each motor unit will be able to determine whether the destination of the data frame is the motor unit itself by processing that is the same as the above-described processing, if an IP address of a multicast group to which the motor unit itself belongs has been held in the buffer of the communication circuit thereof. In the case of the latter example, the higher-level device 150 only needs to transmit the data frame once, and therefore, not only a reduced load on the higher-level device 150 but also a reduced amount of data that passes through a communication channel can be achieved.

Next, a process of writing the rotation direction setting data will now be described below.

The higher-level device 150 transmits a data frame for writing the rotation direction setting data to each of the left-wheel motor unit 106A and the right-wheel motor unit 106B at a given time before the motors 116A and 116B are caused to operate. The given time is, for example, a time when communication has been established between the higher-level device 150 and each of the left-wheel motor unit 106A and the right-wheel motor unit 106B after the self-propelled robot 100 is started.

In the destination device ID 10 or the destination IP address in the data frame for writing the rotation direction setting data, the device ID or the IP address of the motor unit in which the writing is to be performed is specified as the identifier for identifying the motor unit.

In the operation command 12b of the common data structure 12, "Write Data", which indicates writing, is specified. In the attribute command field 12c, "Direction Setting", which indicates the unified operation command, is specified. Further, in the data field 12d, "CW" or "CCW" is specified as the rotation direction. In the case of the example of FIG. 5, in the data field 12d, "CCW" is specified for the left-wheel motor unit 106A, and "CW" is specified for the right-wheel motor unit 106B.

Upon receipt of the data frame generated in the above-described manner, the processors 112A and 112B are able to write the rotation direction setting data separately to the register 113A and the register 113B, respectively. Thus, thereafter, the motors 116A and 116B can be caused to rotate in different rotation directions once the unified operation command is received from the higher-level device 105.

In the description of the above example, the destination device ID 10 or the destination IP address 20 has been described as the identifier of each of the motor units 106A and 106B. However, because main functional parts of the motor units 106A and 106B are the motors 116A and 116B, respectively, the above identifier can also be called an identifier of the motor.

Next, another example in which rotations in different directions are caused by the unified operation command will now be described below.

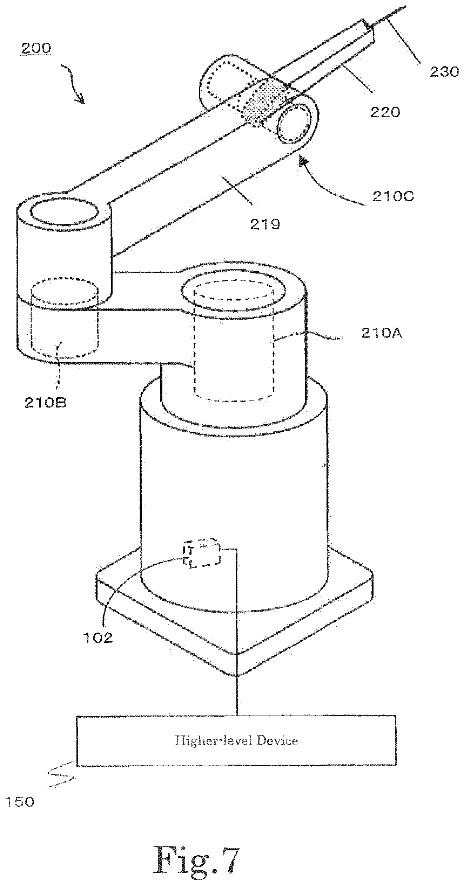

FIG. 7 illustrates the structure of a welding robot 200. The welding robot 200 includes a system controller 102, a first joint drive system 210A, a second joint drive system 210B, a third joint drive system 210C, and a welding torch 230. Two adjacent ones of the joint drive systems are connected to each other through an arm. The third joint drive system 210C, which is arranged at an end portion of an arm 219, is arranged to cause an arm 220 to rotate about a rotating shaft of a motor to move the arm 220 upward or downward, thus adjusting the position of the welding torch 230, which is arranged at a distal end of the arm 220. Note that the moving direction of the arm 220 can be changed from an up-and-down direction to a right-and-left direction by changing the orientation of the rotating shaft of the motor.

The welding robot 200 includes a plurality of joints each of which is capable of rotation by a motor, and motions of the joints are separately and independently controlled by the first to third joint drive systems 210A to 210C.

Each of the first to third joint drive systems 210A to 210C is arranged to operate using a drive signal transmitted from the system controller 102 and/or a data frame transmitted from a higher-level device 105 to the individual joint drive system. Here, the latter example will be described with respect to the third joint drive system 210C in particular.

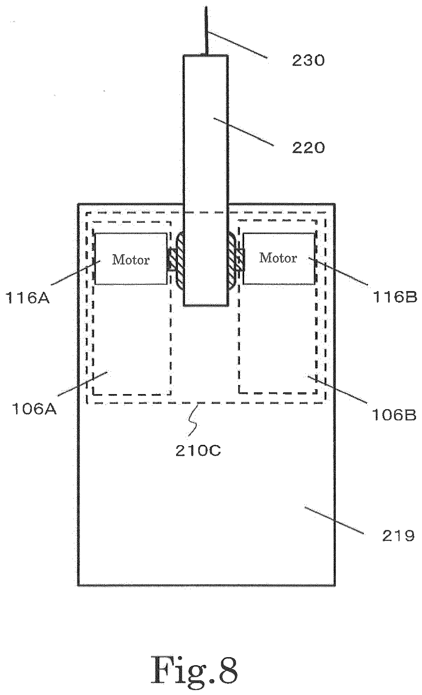

FIG. 8 illustrates the specific configuration of the third joint drive system 210C. Portions of the third joint drive system 210C which have their equivalents in the configuration illustrated in FIG. 5 are denoted by the same reference numerals as those of their equivalents in the configuration illustrated in FIG. 5.

The configuration of the third joint drive system 210C is similar to the configuration illustrated in FIG. 5 except that a rotating shaft of a motor 116A and a rotating shaft of a motor 116B are arranged opposite to each other, that is, are each directed toward the arm 220. It will be understood that the configuration illustrated in FIG. 8 corresponds to the configuration illustrated in FIG. 3B.

Accordingly, a further detailed description will be omitted. Note that, in the case of FIG. 7, each of the system controller 102, the first joint drive system 210A, the second joint drive system 210B, and the third joint drive system 210C can be called a motor drive system.

In each of the above-described examples, two motors are arranged as a pair with the rotating shafts thereof generally aligning with each other. Other such examples include a cooking stirrer, a screw propeller, a dust collecting brush of a cleaning robot, a pickup arm used for harvesting vegetables, a belt conveyor, a massage machine, and a UFO catcher. Motor drive systems according to embodiments of the present disclosure can similarly be adopted in these examples as well.

Meanwhile, a group of motors whose rotating shafts are not aligned with each other but which are arranged to rotate in mutually opposite directions are sometimes used to produce one unified operation. Such examples include automatic open/close mechanisms for automatic doors or curtains, which cause two doors or curtains to move symmetrically to open or close the doors or curtains. In such cases also, the motors are caused to rotate in opposite directions at the same time. Therefore, motor drive systems according to embodiments of the present disclosure are applicable.

Examples of conceivable "unified operations" include moving forward/backward, moving upward/downward, turning to the left/right, pivoting to the left/right, and opening/closing.

Note that the above examples are not meant to limit motor drive systems according to embodiments of the present disclosure.

### INDUSTRIAL APPLICABILITY

Motor drive systems according to embodiments of the present disclosure can be widely used to control motors in a variety of motor drive systems including a plurality of motor units.

### DESCRIPTION OF THE REFERENCE CHARACTERS

100: self-propelled robot
103: motor drive system
104A: left wheel
106A: left-wheel motor unit
110A: communication circuit
111A: buffer
112A: processor (control circuit)
113A: register
114A: motor drive circuit
116A: motor
104B: right wheel
106B: right-wheel motor unit
110B: communication circuit
111B: buffer
112B: processor (control circuit)
113B: register
114B: motor drive circuit
116B: motor
150: higher-level device

## Claims

1. A motor drive system comprising a plurality of motor units, wherein
each of the plurality of motor units is arranged to operate in accordance with a unified operation command transmitted from an outside to cause an operation to be accomplished by the motor drive system as a whole; and
each of the plurality of motor units includes:
a communication circuit arranged to receive the unified operation command;
a motor;
a storage device arranged to store data representing a rotation direction of the motor associated with the unified operation command;
a control circuit arranged to refer to the data, and generate a control signal for causing the motor to rotate in the rotation direction associated with the unified operation command; and
a drive circuit arranged to cause an electric current to pass through the motor on a basis of the control signal.

2. The motor drive system according to claim 1, wherein
the plurality of motor units include a first motor unit and a second motor unit;
the operation caused by the unified operation command and to be accomplished by the motor drive system as a whole is accomplished by causing the motor of the first motor unit to rotate in a first direction, and causing the motor of the second unit to rotate in a second direction opposite to the first direction;
the storage device of the first motor unit stores data representing the first direction as the rotation direction; and
the storage device of the second motor unit stores data representing the second direction as the rotation direction.

3. The motor drive system according to one of claims 1 and 2, wherein the unified operation command is an instruction to cause a mobile unit in which the motor drive system is installed to perform an operation of moving forward, moving backward, turning to a right, or turning to a left.

4. The motor drive system according to one of claims 1 and 2, wherein the unified operation command is an instruction to cause an arm of a robot in which the motor drive system is installed to move to a given position.

5. The motor drive system according to claim 4, wherein the command is an instruction to cause the arm of the robot to move upward or downward or to move to a left or to a right.

6. A motor unit for use in a motor drive system, the motor unit comprising:
a communication circuit arranged to receive, from an outside, a unified operation command to cause an operation to be accomplished by the motor drive system as a whole;
a motor;
a storage device arranged to store data representing a rotation direction of the motor associated with the unified operation command;
a control circuit arranged to refer to the data, and generate a control signal for causing the motor to rotate in the rotation direction associated with the unified operation command; and
a drive circuit arranged to cause an electric current to pass through the motor on a basis of the control signal.

7. The motor unit according to claim 6, wherein the communication circuit is arranged to receive a data frame including the unified operation command, the data frame having the communication circuit specified as a destination thereof.

8. The motor unit according to one of claims 6 and 7, wherein the storage device is a register arranged in the control circuit.

9. The motor unit according to any one of claims 6 to 8, wherein the control circuit is arranged to generate a PWM signal as the control signal.

10. The motor unit according to claim 9, wherein the drive circuit is an inverter circuit arranged to cause an electric current to pass through the motor on a basis of the PWM signal.
